# EUROPEAN PATENT SPECIFICATION

(11) **EP 1 447 357 B1**
(45) Date of publication and mention of the grant of the patent: **10.08.2005**
(21) Application number: 04075347.7
(22) Date of filing: 04.02.2004
(51) Int. Cl.: B65G 47/08

(54) **Ordering apparatus for solid articles**
Anordnungsvorrichtung für feste Gegenstände
Dispositif d'arrangement d'articles rigides

(30) Priority: 13.02.2003 IT RE20030014
(43) Date of publication of application: 18.08.2004
(73) Proprietor: Bema - S.r.l., 42030 Viano (RE) (IT)
(72) Inventor: Murarotto, Emilio, c/o BEMA S.R.L., 42030 Viano (RE) (IT)
(74) Representative: Corradini, Corrado

(56) References cited:
- EP-A- 0 994 025
- DE-U- 29 821 826
- FR-A- 1 543 301
- GB-A- 2 316 926
- US-A- 5 492 216

## Description

The present invention relates to an ordering apparatus for positioning substantially solid articles (solid to the point of being able to be gripped by two opposing bodies urged against each other) in ordered succession at predetermined distances apart, in particular articles of a shape such as not to be able to be grouped together by contact, for example articles with round surfaces, or having precarious equilibrium, or relatively fragile articles (e.g. see: document GB-A-2316926).

The articles arrive at the ordering apparatus in a variable flow(continuous or intermittent) and are then discharged from it in an ordered manner and in predefined quantities, to be manipulated by manipulation units positioned downstream, typically, but not exclusively, units which accumulate them and/or pack them in suitable packages.

An ordering apparatus of known type comprises an endless conveyor belt provided on its outer surface with pockets open in a radial direction; the pockets are loaded one after the other, by a movement perpendicular to the belt surface, each with a single article, by an entry conveyor located in a fixed position. When a predetermined group of articles has been loaded, this is moved to the manipulation unit positioned downstream, which extracts it from the pockets of the conveyor belt.

The conveyor belt can rotate stepwise, the axes of rotation of its end wheels being fixed during a stage in which it only receives the articles During the stage in which the articles loaded onto the belt are withdrawn by the downstream unit, the belt continues to move stepwise while the axes of its wheels move (the wheels assume a rolling movement); by this means the belt is able both to receive articles from the entry conveyor and at the same time present in front of the downstream unit a series of articles to be withdrawn, in a halted position.

A second type of ordering apparatus also comprises an endless conveyor belt provided on its outer surface with pockets open on an outer side, these being loaded one after the other, with a movement perpendicular to the belt advancement direction, each with a single article by an entry conveyor, in a fixed position.

In this second type, the belt is divided along a longitudinal plane into two parallel, side-by-side, independent rings; while one ring receives the articles at its entrance, the other ring carries a series of previously loaded articles to their withdrawal unit positioned downstream, after which it returns to the end of the first ring to receive other articles at its entrance. These apparatus are usually used for articles of yieldable form, which cannot be accumulated in an ordered manner by contact; a typical application is for confectionery or oven products (breakfast snacks, crackers) or pharmaceuticals.

A considerable problem connected with said known ordering apparatus is that they require the pockets to be changed when the size or shape of the article to be treated changes, this requiring considerable working time and an equal down time of the production line. In addition a considerable quantity of pockets of different format is usually required, with increased plant costs.

To reduce these times, it is usual to replace the entire belt with another to which the required series of pockets of different format is already fixed; this necessitates the purchase of a corresponding series of chains with relative pockets of evidently greater cost than the loose pockets alone; it is calculated that a series of twenty rings with suitable pockets of different formats has the same cost as the apparatus without the rings.

An object of the present invention is firstly to provide a new ordering apparatus able to operate on substantially solid articles, which does not comprise said pockets present in known ordering apparatus.

Another object of the invention is to provide an ordering apparatus which solves the aforestated problems in relation to the change of format, i.e. which enables the article format to be changed in a considerably shorter time and without special tools being required.

Another object is to reduce the article entry speed, to enable relatively fragile articles to be treated.

Another object is to reduce the overall cost of the apparatus.

These and further objects are attained by the invention as characterised in the claims.

The invention is based on the fact of comprising:
a main channel within which the articles are accumulated and advanced, having an entrance, an exit and a longitudinal advancement axis, and
comprising, for the articles, at least two gripping means movable independently of each other along said longitudinal axis and positioned one behind the other along that axis;
each gripping means comprising at least two flexible linear gripping elements slidable longitudinally, parallel and opposing, along a path parallel to the longitudinal axis and positioned at a distance apart such that each article can be inserted into contact with both, they being arranged to retain the articles individually by an opposing transverse thrust;
an introduction means positioned at the entrance to the main accumulation and advancement channel to advance the articles one at a time into the initial end of the main accumulation and advancement channel until their loading is taken over by it;
control means for controlling the movement of the main accumulation and
advancement channel and/or of the introduction means, to move a gripping means, lying in the loading take-over position at the entrance, in synchronism with the movement of the articles on the introduction means such that each article becomes disposed within the main channel at a predetermined distance from the preceding article, and for controlling the movements of the two gripping means such as to cause them, one at a time, to discharge the articles independently of the operation of the other gripping means.

The invention is described in detail hereinafter with the aid of the accompanying figures which illustrate a non-exclusive embodiment thereof.
Figure 1 is an overall vertical elevation of the apparatus.
Figure 1A is an enlarged detail of Figure 1, regarding the entrance to the main accumulation and advancement channel.

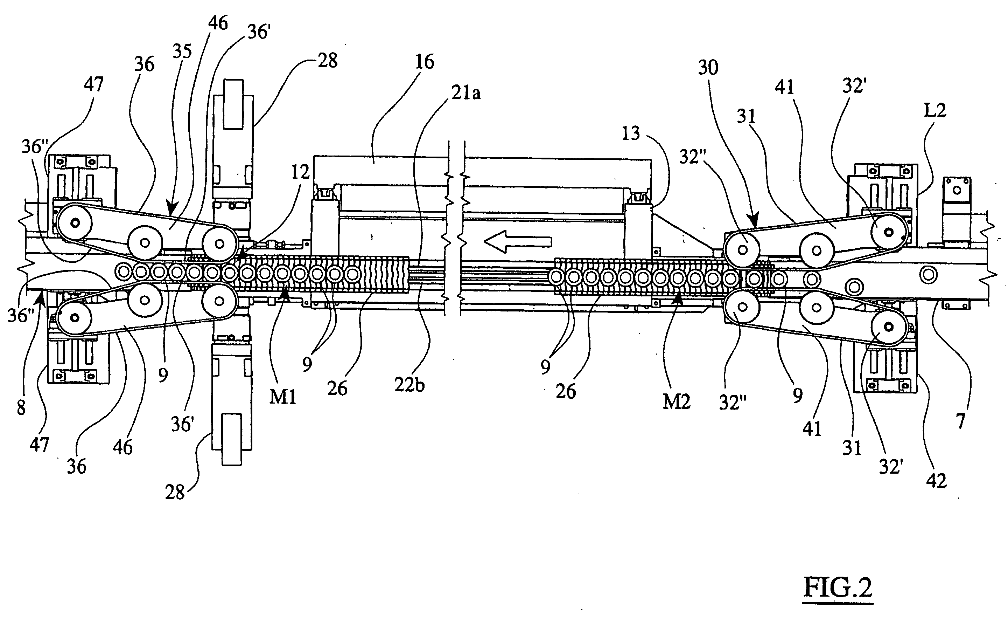

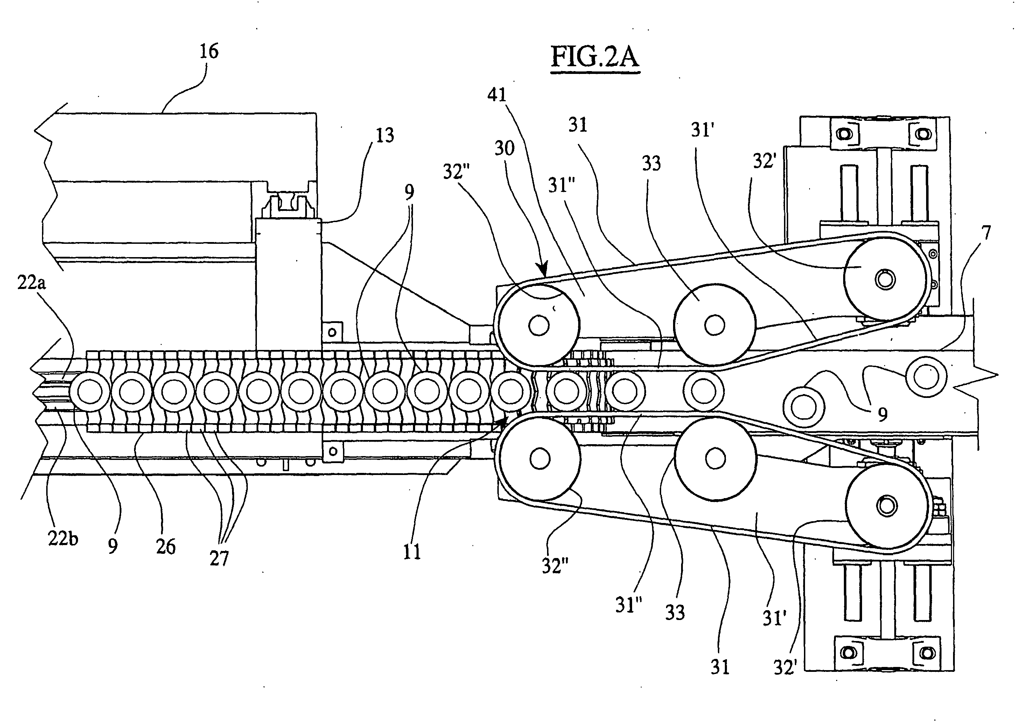

Figure 2 is the section on the plane II-II of Figure 1.
Figure 2A is an enlarged detail of Figure 2, regarding the entrance to the main channel.
Figure 3 is the section on the plane III-III Figure 1.

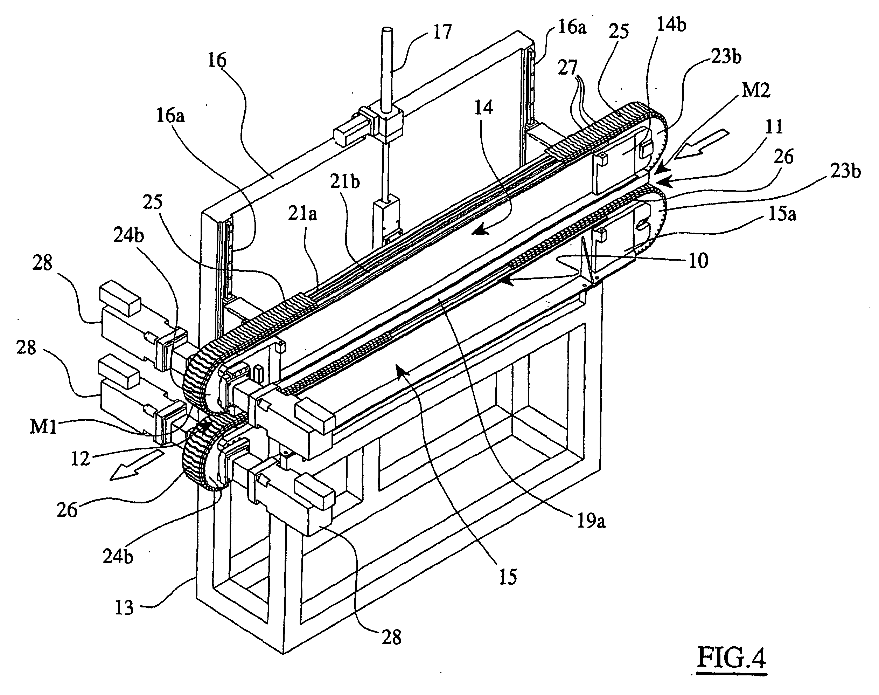

Figure 4 is a perspective view of the main channel alone.
Figure 5 is the section on the plane V-V of Figure 1.

The ordering apparatus of the invention comprises a main accumulation and advancement channel, indicated overall by 10, to which the articles 9 are fed by an upstream conveyor 7, and within which the articles are gripped, accumulated in an ordered manner and advanced, and finally discharged to a downstream conveyor 8. The ordering apparatus operates by taking the articles 9 fed by the conveyor 7 and forming groups of articles disposed in an ordered manner, i.e. at precise predetermined distances apart (distances which are normally equal but which may vary) in the interior of the main channel 10; finally, when the groups have been completed they are released, maintaining the same order, onto the downstream conveyor 8 which carries them into the zone of action of a manipulation unit for the groups.

The articles 9 shown by way of example in the figures are frusto-conical cups; however, different articles of different shape and dimensions can be treated by the invention.

The main channel 10 comprises an entrance 11 and an exit 12, and a central longitudinal advancement axis A.

It also comprises at least two pairs of conveyor chains 21 a, 21 b and 22a, 22b, where:
- each said chain 21, 22 passes endlessly about two end wheels (23a, 24a and 23b, 24b), with a longitudinal portion thereof defining a flexible linear gripping element (described in detail hereinafter),
- each pair of chains 21 a, 22a and 21 b, 22b comprises at least two chains on opposite sides of the longitudinal axis A (specifically, one disposed above the other).

The two pairs of chains 21 a, 22a and 21 b, 22b are positioned parallel and close together side by side, and are driven independently.

Each chain 21, 22 possesses a respective longitudinal portion 25 or 26, opposite and parallel to the respective longitudinal portion 26 or 25 provided on the other chain, and which is provided on its radially outer surface with a plurality, in close-together succession, of elastically yieldable presser elements 27. The radially outer surface of the presser elements 27 projects radially outwards from the chains and, when the two portions 25, 26 with relative pressers 27 lie on the close-together branches of the chains, the distance between them is slightly less than the corresponding dimension (height) of the articles 9, so that each article 9 can be inserted between them into contact with both.

Each said longitudinal chain portion 25, 26, with relative pressers 27, defines a respective flexible linear gripping element slidable along a fixed path, and with which another respective longitudinal portion 26 and 25 of the opposing chain is parallel and opposite about the longitudinal axis; said two portions 25 and 26 together define a gripping means M1 or respectively M2, able to retain the articles individually by opposing transverse thrust.

Two gripping means M1 and M2 are hence defined, these being mutually independent and positioned one behind the other in the longitudinal direction.

According to the embodiment shown in the figures, two upper chains 21 a and 21 b are provided extending endlessly about two end wheels per chain, one wheel 23a or 23b being positioned at the entrance 11 and one wheel 224a or respectively 24b being positioned at the exit 12; said wheels are supported by a frame 14 comprising a central horizontal longitudinal member 14a interposed between the wheels, its ends being joined to two endpieces 14b which support the wheels; said upper chains 21 a and 21 b hence extend along two close-together parallel vertical planes.

Likewise two lower identical chains 22a and 22b are provided extending endlessly about two end wheels per chain, one wheel 23a or 23b being positioned at the entrance 11 and one wheel 24a or 24b being positioned at the exit 12; said wheels are supported by a frame 15 (substantially identical to said frame 14) comprising a central horizontal longitudinal member 15a interposed between the wheels, its ends being joined to two endpieces 15b which support the wheels; said lower chains 22a and 22b hence extend along two close-together parallel vertical planes identical to the planes of the chains. The said chain wheels are positioned side by side in pairs on the same axis. The lower branches of the two upper chains 21 and the upper branches of the two lower chains 22 (i.e. the branches closest to each other) are parallel and lie on opposite sides of the axis A.

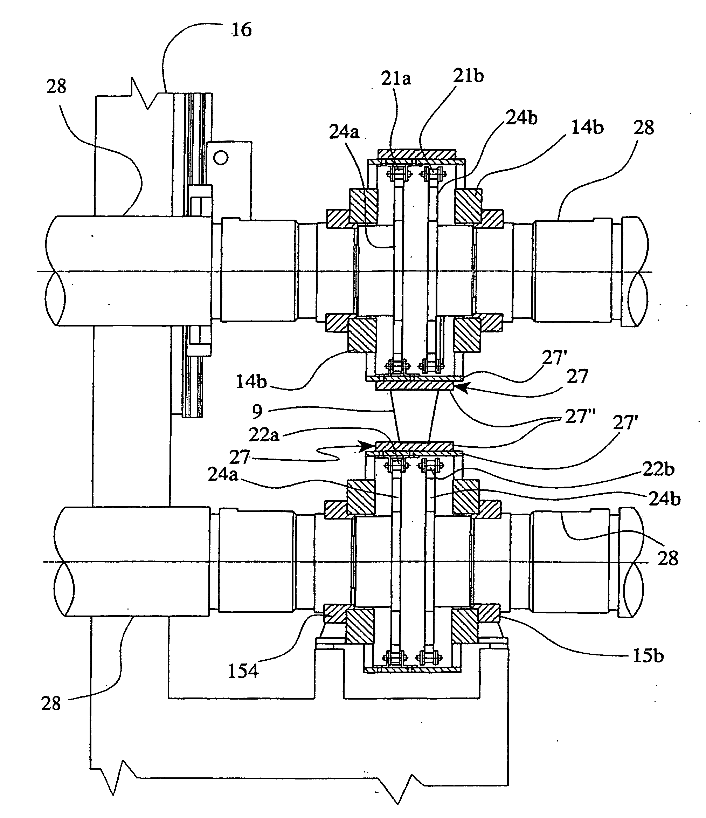

Said plurality of pressers 27 are fixed along the outer surface of a longitudinal portion 25 of the upper chain 21 a (that to the left in Figure 3), which is less than one half the length of the entire chain. These pressers consist of plates 27' which are joined to the chains and have fixed to their outer face a like number of blocks 27" of elastomeric material of generally parallelepiped shape, the major faces of which have a zig-zag profile to define for the articles 9 a surface of contact which is substantially continuous or at least such as not to create interruptions along transverse straight lines. This portion 25 of the upper chain is opposed by an equal longitudinal chain portion 26 provided in the lower chain 22a (that to the left). When the two longitudinal portions 25 and 26 of the left hand chains form part of the close-together branches, they lie at a distance apart slightly less than the corresponding vertical dimension (i.e. the height) of the articles 9, so that their interference with the articles 9 produces a gripping action on the articles 9 by elastic reaction. These two portions 25 and 26 define said gripping means M1.

In the same manner, an equal plurality of pressers 27 are positioned along a longitudinal portion 25 of the upper chain 21b (that to the right in Figure 3); this portion 25 of the upper chain is opposed by an equal longitudinal chain portion 26 provided in the lower chain 22b (that to the right). The two longitudinal portions 25 and 26 of the right hand chains also lie at a distance apart slightly less than the corresponding vertical dimension of the articles 9, so as to produce a gripping action by elastic reaction.

These two portions 25 and 26 define said gripping means M2.

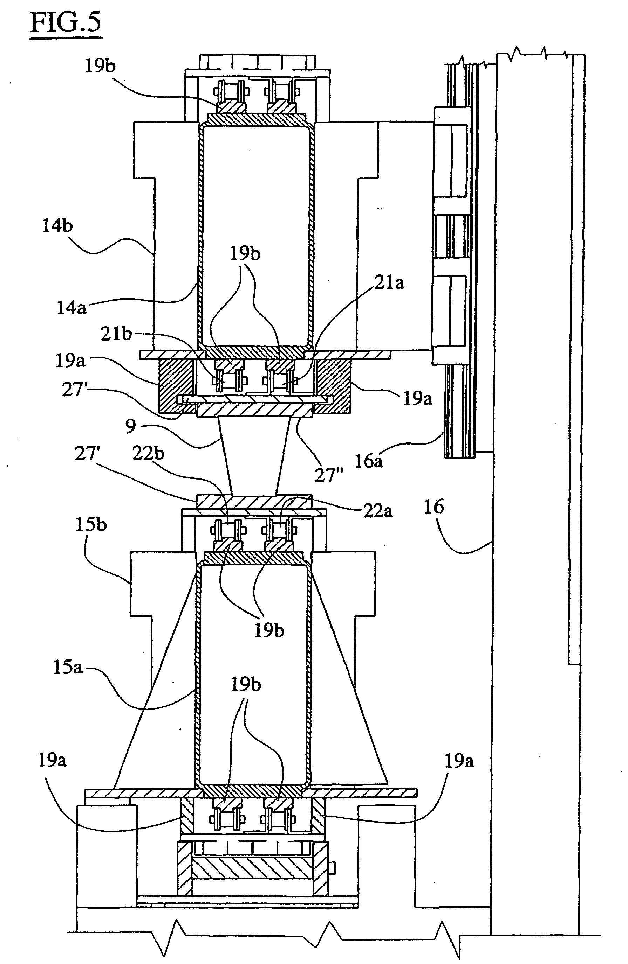

Horizontal rectilinear guides 19a and 19b are provided along the rectilinear chain portions, both those close together and those far apart, their purpose being to maintain said chain portions and in particular the linear gripping elements 25 and 26 rectilinear. In detail, the guides 19a are positioned at the lower branches and are bilateral, in contact with them there sliding the plates 27' of the pressers 27, whereas the guides 19b are positioned in direct contact with the chains (see Figure 5 in particular).

The two gripping means M1 and M2 are movable independently of each other and are positioned one behind the other along the longitudinal path (defined by the axis A) of the main channel 10.

The wheels which drive the chains are the four upper and lower wheels 24a and 24b positioned at the exit 12, each of them being operated by a respective motor 28.

In Figure 3 the pressers 27 are shown joined to the left hand chains 21 a and 22a, whereas the right hand chains 21 b and 22b are without respective pressers 27 along that section on which the pressers of the left hand chains are positioned, and do not come into contact with the pressers of the left hand chains.

The four front wheels 23a and 23b have the same diameter and, together with the chains 21 and 22, form the entrance 11 to the main channel 10. The initial end of the main channel 10 is positioned substantially where the internal rectilinear portion of the closer-together chain branches begins, the contact surface defined by the lower linear flexible gripping element 25 being substantially coplanar with the resting surface of the upstream conveyor 7, the downstream end of which is positioned close to the entrance 11.

An introduction means 30 is positioned at the entrance 11 to advance, one at a time, the articles 9 fed by the upstream conveyor 7 into the initial end of the main accumulation and advancement channel until their loading is taken over by it.

The introduction means 30 comprises a pair of endless opposing belts 31 lying in a plane higher than the conveying plane of the conveyor 7, and is horizontal, i.e. is transverse to the vertical plane in which said flexible gripping elements 25 and 26 lie.

Each belt 31 passes about an upstream end pulley 32', a downstream end pulley 32" and an intermediate pulley 33 which deforms the profile of the inner (closer together) branches of the belts to result in an upstream portion 31' which is inclined to the axis A and a successive downstream portion 31" which is parallel to the axis A. Said pulleys 32', 32" and 33 of each belt 31 are supported by a respective arm 41, one of these arms rotating slightly about the vertical axis of the upstream pulley and being urged by elastic means towards the opposite belt.

The two opposing portions 31' define an advancement channel of decreasing width, serving as introduction to the subsequent advancement channel of constant width defined by the longitudinal opposing portions 31 ", in which these are positioned at a distance apart such, in relation to the dimensions of the articles 9, as to grip them between themselves by acting on an appropriate region of the articles. For example, in the figures, the articles 9 are gripped slightly above their base.

The belts 31 are driven by the upstream pulleys 32', which are operated by the same gearmotor 34 which operates the upstream conveyor 7. At the exit 12 there is positioned an evacuator means 35 to expel the ordered group of articles which forms within the main channel 10 and to position them on the downstream conveyor 8 while maintaining them at the same distance apart.

The evacuator means 35 is substantially identical to and symmetrical with the introduction means 30. In this respect, it comprises two endless opposing belts 36 lying in a plane higher than the conveying plane of the conveyor 8, and is horizontal. The inner branches of the two belts 36 comprise two opposing longitudinal portions 36' which define an advancement channel of constant width such as to grip them between themselves by acting on a suitable region of the articles, these being followed by two opposing diverging portions 36" which serve to release the articles onto the downstream conveyor 8.

The ordering apparatus also comprises control means for controlling the movement of the main channel 10 and/or of the introduction means 30, in order to move that gripping means M1 or M2 ready to take over loading at the entrance 11 in synchronism with the movement of the articles 9 on the introduction means, so that each article 9 becomes gripped and retained within the main channel 10 by the two linear flexible gripping elements 25 and 26, at a predetermined distance from the previously loaded article; said control means also control the movements of the two gripping means M1 and M2 such as to cause them, one at a time, to discharge the articles 9 onto the downstream conveyor 8, independently of the operation of the other gripping means.

Said control means (not shown in the drawings) can be of known type and can be implemented by any expert on the basis of the method of operation of the ordering apparatus. Preferably, said means comprise at least one sensor means able to sense the presence of each article when this is positioned in the downstream portion 31" of the introduction means 30 (retained by the belts 31), an encoder associated with each gripping means M1, M2 able to constantly determine the angular position of said means, and an electronic processor means to coordinate the data provided by the sensor means and encoder, and to control the operation of the apparatus in programmable manner.

In detail, the apparatus operates in the following manner.

The articles 9 are fed one at a time in succession to the main channel 10 by the upstream conveyor 7 in an irregular manner, i.e. at a random distance apart.

When any article arrives between the converging belt portions 31', it is urged thereby towards the centre line of the introduction means 30 and is then conveyed into the channel defined by the next pair of longitudinal portions 31" where it is gripped and advanced rigidly with the belts 31. When this article reaches the point at which the sensor means operates, the signal produced thereby causes the electronic processor to commence moving the linear gripping elements 25 and 26 of the gripping means (M2 in the figures) which at that moment is ready to take over loading of the articles at the entrance 11; the electronic processor, by taking account of the dimensions of the article and its position in the introduction means 30, of the angular position of the linear gripping elements 25 and 26, and of the acceleration time to set the chains in motion, determines the departure of the linear gripping elements 25 and 26 such that once inserted into the main channel 10, the article 9 finds itself at the required predetermined distance from the previously loaded article.

As soon as the gripping means M2 has undergone one advancement step, which is equal to the maximum longitudinal dimension of the article (its top diameter) plus the required minimum distance between two articles, the article 9 now inserted lies in the exact position in which the previous article had halted. At this point, the linear gripping elements 25 and 26 stop moving while awaiting loading of the next article. For example, the stop point is determined as soon as the article is inserted to such an extent as to be retained sufficiently securely between the linear gripping elements 25 and 26.

Each article which reaches the entrance 11 is treated in the same manner with the result that within the main channel 10, between the gripping elements of the gripping means M2, a stepwise-advancing series of articles disposed in the predetermined ordered manner is retained with ever increasing length as the articles enter the main channel 10. When this series of articles has reached the predetermined number, the gripping means M2 abandons its loading take-over mode and moves to the exit 12 where it releases the articles 9; during this stage the gripping means M2 moves with independent movement which is different from that during loading take-over, it moving faster and continuously.

During this stage, instead of the gripping means M2 the gripping means M1 operates which, on activation, lies adjacent to and at the end of the means M2: in this manner no interruption occurs in the loading of the articles arriving from the upstream conveyor 7.

While the gripping means M1 takes over loading of the articles in the manner described for the gripping means M2, the gripping means M2 discharges the articles onto the downstream conveyor 8 and then returns adjacent to the end of the means M1.

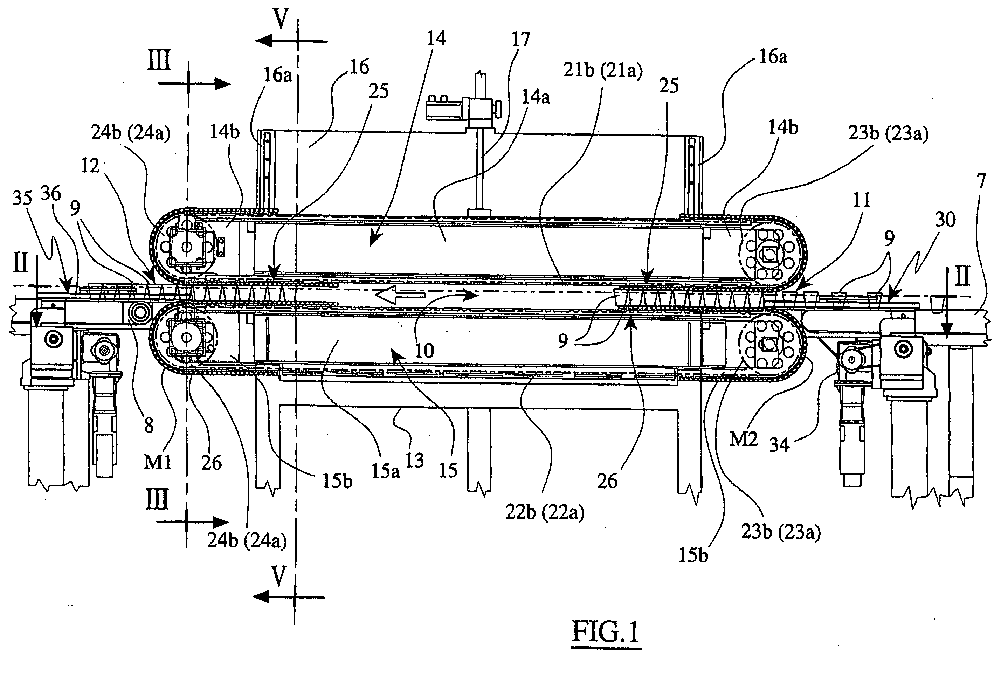

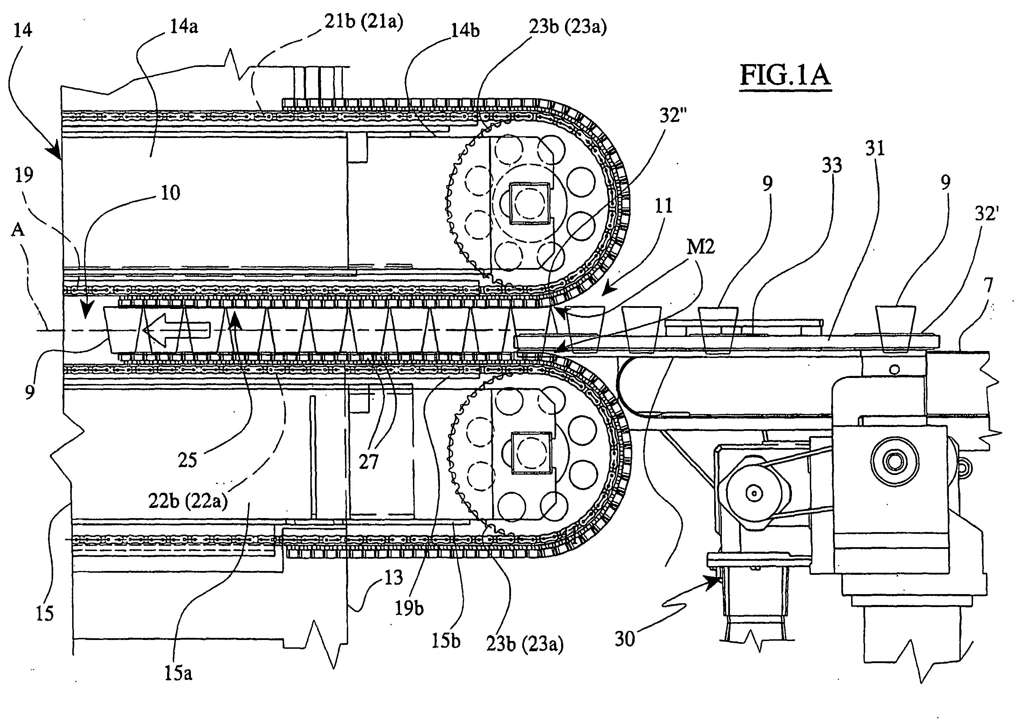

Figure 1 shows in full lines the position of the means M2 while taking over the loading of the articles 9 at the entrance 11 and the position of the gripping means M1 while discharging its articles 9 onto the downstream conveyor 8.

According to the invention, the distance between said linear gripping elements 25 and 26 can be varied to adapt them to the corresponding article dimension (height). For this purpose, whereas the lower chains 22 are supported by the support frame 15 which is supported in a fixed position by a base frame 13, the two upper wheels 23 and 24 are supported by the support frame 14 which is slidingly secured along vertical rails 16a fixed to a vertical sidewall 16. By means of a vertically operating linear actuator 17, for example comprising a rotating screw engaged in a lead nut, the support frame 14 and with it the upper chains 21 can be translated vertically, to vary the distance between said linear gripping elements 25 and 26 at will.

Likewise the distance between the belts 31 of the introduction means 30 can be adjusted to adapt them to the corresponding dimension (diameter at a point just above the base) of the articles 9. For this purpose, the two arms 41 carrying the two groups of pulleys with relative belt 31 are carried by respective plates 42 which can translate, operated by a linear actuator, in a transverse direction so that the belts 31 can approach or withdraw from each other symmetrically about the centre line of the main channel 10.

The belts 36 of the evacuator means 35 present similar characteristics, their distance apart being variable to adapt them to the corresponding dimension (diameter at a point just above the base) of the articles 9. Each group of pulleys with relative belt 36 is fixed to a respective arm 46, the two arms 46 being carried by respective plates 47 which can translate, under the action of a linear actuator, in a transverse direction to cause the belts 36 to approach or withdraw from each other symmetrically about the centre line of the main channel 10.

In the apparatus of the invention, a change in the article format (dimensions and/or shape) can be accommodated by simply adjusting the distance between the linear gripping elements 25 and 26 and/or between the belts of the introduction means 30 and of the evacuator means 35 and adjusting the length of the advancement step of the gripping means M1 and M2 during the loading stage.

All this can be achieved mechanically and automatically by the operation control means, with extremely fast times. Moreover it is all done with the same machine without special equipment being required to accommodate a changing format.

The different formats which can be accommodated are of indeterminate number.

Another advantage of the invention is that the articles are not inserted perpendicularly into the pockets, as occurs in traditional apparatus; according to the invention, insertion takes place in the direction in which the gripping means move, with consequent elimination of any impact between pockets and articles.

Numerous modifications to the illustrated embodiment of the invention can be made, without leaving the scope of the inventive idea as claimed below.

For example, a number of linear gripping elements other than two can be provided, for example three or more, but always opposite each other; in addition the linear gripping elements can be disposed in non-vertical planes and likewise the belts of the introduction means 30 and of the evacuator means 35 can be disposed in non-horizontal planes.

## Claims

1. An ordering apparatus for solid articles, **characterised by** comprising: a main channel (10) within which the articles are accumulated and advanced, having an entrance, an exit and a longitudinal advancement axis (A), and comprising, for the articles, at least two gripping means (M1, M2) movable independently of each other along said longitudinal axis (A) and positioned one behind the other along that axis, **characterised by** the following features:
each gripping means (M1, M2) comprises at least two flexible linear gripping elements (25, 26) slidable longitudinally, parallel and opposing, along a path parallel to the longitudinal axis (A) and positioned at a distance apart such that each article can be inserted into contact with both, they being arranged to retain the articles individually by an opposing transverse thrust,
an introduction means (30) is positioned at the entrance to the main accumulation and advancement channel (10) to advance the articles one at a time into the initial end of the main channel (10) until their loading is taken over by it,
control means for controlling the movement of the main channel (10) and/or of the introduction means (30), to move a gripping means (M1, M2), are positioned for loading take-over at the entrance, in synchronism with the movement of the articles on the introduction means (30) such that each article becomes disposed within the main channel (10) at a predetermined distance from the preceding article, and for controlling the movements of the two gripping means (M1, M2) such as to cause them, one at a time, to discharge the articles independently of the operation of the other gripping means.

2. An ordering apparatus as claimed in claim 1, **characterised in that** each gripping means (M1, M2) comprises at least one pair of conveyor chains (21 a, 21 b, 22a, 22b), where
each chain passes endlessly about two end wheels (23a, 23b, 24a, 24b), with a longitudinal portion thereof defining a said flexible linear gripping element (25, 26),
each pair of chains (21a, 21b, 22a, 22b comprises at least two chains on opposite sides of the longitudinal axis (A),
the two pairs of chains being positioned parallel and close together side by side, and being driven independently.

3. An ordering apparatus as claimed in claim 2, **characterised in that** said flexible linear gripping elements (25, 26) are each defined by a respective longitudinal chain portion (21 a, 21 b, 22a, 22b), on the outer surface of which are fixed a plurality, in close-together succession, of elastically yieldable presser elements (27), the distance between two opposing flexible linear elements (25, 26) being slightly less than the corresponding dimension of the articles, so that interference with the articles gives rise to a gripping action.

4. An ordering apparatus as claimed in claim 1, **characterised in that** said introduction means (30) comprises a pair of endless opposing belts (31) lying in a plane transverse to that in which said flexible linear gripping elements (25, 26) lie, and having a longitudinal portion 31" in which they are positioned at a distance apart such, in relation to the dimensions of the articles, as to grip them between themselves.

5. An ordering apparatus as claimed in claim 1, **characterised in that** the distance between said gripping elements (25, 26) is variable to adapt them to the corresponding dimension of the articles.

6. An ordering apparatus as claimed in claim 4, **characterised in that** the distance between said opposing belts (31) is variable to adapt them to the corresponding dimension of the articles.

## Patentansprüche

1. Anordnungsvorrichtung für feste Gegenstände
**dadurch gekennzeichnet, dass**
sie Folgendes aufweist:
Einen Hauptkanal (10), in dem die Gegenstände angesammelt und vorwärts bewegt werden, der einen Eingang, einen Ausgang und eine Vorwärtsbewegunglängssachse (A), und für die Gegenstände mindestens zwei Greifeinrichtungen (M1,M2) aufweist, die unabhängig voneinander an der Längsachse (A) entlang bewegbar und entlang der Achse hintereinander positioniert sind,
**gekennzeichnet durch** die folgenden Merkmale:
Jede Greifeinrichtung (M1,M2) weist mindestens zwei flexible lineare Greifelemente (25,26) auf, die in Längsrichtung, parallel und einander gegenüberliegend entlang eines parallel zu der Längsachse (A) verlaufenden Weges gleitend bewegbar und so in einem Abstand voneinander positioniert sind, dass jeder Gegenstand in Kontakt mit beiden eingesetzt werden kann, wobei sie angeordnet sind, um die Gegenstände **durch** einen in Querrichtung verlaufenden entgegengesetzten Druck einzeln zurückzuhalten,
eine Einführungseinrichtung (30), die an dem Eingang zu dem Hauptsammel- und Vorwärtsbewegungskanal (10) positioniert ist, um jeweils einen der Gegenstände in das erste Ende des Hauptkanals (10) vorwärts zu bewegen, bis ihre Ladung davon übernommen wird,
eine Steuereinrichtung zum Steuern der Bewegung des Hauptkanals (10) und/oder der Einführungseinrichtung (30), um eine Greifeinrichtung (M1,M2), die in der Position zur Übernahme der Ladung am Eingang liegt, in Synchronisation mit der Bewegung der Gegenstände auf der Einführungseinrichtung (30) so zu bewegen, dass jeder Gegenstand innerhalb des Hauptkanals (10) in einem zuvor festgelegten Abstand von dem vorangegangenen Gegenstand angeordnet wird, und zum Steuern der Bewegungen der zwei Greifeinrichtungen (M1,M2), um jeweils eine davon zu veranlassen, die Gegenstände unabhängig von dem Betrieb der anderen Greifeinrichtung zu entladen.

2. Anordnungsvorrichtung nach Anspruch 1,
**dadurch gekennzeichnet, dass**
jede Greifeinrichtung (M1,M2) mindestens ein Paar von Förderketten (21,21b,22a,22b) aufweist, wobei jede Kette endlos um zwei Endräder (23a,23b,24a,24b) umläuft, wobei ein Längsabschnitt derselben ein flexibles lineares Greifelement (25,26) festlegt,
jedes Paar von Ketten (21a,21b,22a,22b) mindestens zwei Ketten auf entgegengesetzten Seiten der Längsachse (A) aufweist,
die zwei Paare von Ketten parallel und nahe beieinander, nebeneinander angeordnet und unabhängig voneinander angetrieben sind.

3. Anordnungsvorrichtung nach Anspruch 2,
**dadurch gekennzeichnet, dass**
die flexiblen linearen Greifelemente (25,26) jeweils durch einen jeweiligen Kettenlängsabschnitt (21a,21b,22a,22b) festgelegt sind, auf deren Außenfläche in enger Folge eine Mehrzahl elastisch nachgiebiger Presselemente (27) befestigt ist, wobei der Abstand zwischen zwei einander gegenüberliegenden flexiblen linearen Elementen (25,26) etwas geringer als die entsprechende Abmessung der Gegenstände ist, so dass eine Interferenz mit den Gegenständen einen Greifvorgang veranlasst.

4. Anordnungsvorrichtung nach Anspruch 1,
**dadurch gekennzeichnet, dass**
die Einführungseinrichtung (30) ein Paar endloser, einander gegenüberliegender Bänder (31), die in einer Ebene liegen, die quer zu derjenigen verläuft, in der die flexiblen linearen Greifelemente (25,26) liegen, und einen Längsabschnitt 31" aufweist, wobei sie im Verhältnis zu den Gegenständen in einem solchen Abstand voneinander positioniert sind, dass sie diese zwischen sich selbst ergreifen.

5. Anordnungsvorrichtung nach Anspruch 1,
**dadurch gekennzeichnet, dass**
der Abstand zwischen den Greifelementen (25,26) variabel ist, um sie an die entsprechende Abmessung der Gegenstände anzupassen.

6. Anordnungsvorrichtung nach Anspruch 4,
**dadurch gekennzeichnet, dass**
der Abstand zwischen den einander gegenüberliegenden Bändern (31) variabel ist, um sie an die entsprechende Abmessung der Gegenstände anzupassen.

## Revendications

1. Appareil de rangement ordonné d'articles solides,
**caractérisé en ce qu'**il comprend :
un canal principal (10) dans lequel les articles sont accumulés et avancent, le canal ayant une entrée, une sortie et un axe longitudinal d'avance (A) et comportant, pour les articles, au moins deux dispositifs de saisie (M1, M2) mobiles indépendamment l'un de l'autre le long de l'axe longitudinal (A) et positionnés l'un derrière l'autre le long de cet axe, **caractérisé par** les caractéristiques suivantes :
chaque dispositif de saisie (M1, M2) comporte au moins deux éléments linéaires souples de saisie (25, 26) qui peuvent coulisser longitudinalement, parallèlement et en regard, le long d'un trajet parallèle à l'axe longitudinal (A) et sont disposés à une distance telle que chaque article peut être inséré au contact des deux qui sont disposés afin qu'ils retiennent les articles individuellement par poussée transversale antagoniste,
un dispositif d'introduction (30) est disposé à l'entrée du canal principal d'accumulation et d'avance (10) pour faire avancer les articles un à un à l'extrémité initiale du canal principal (10) jusqu'à ce que leur chargement soit assuré par lui, et
un dispositif de commande du déplacement du canal principal (10) et/ou du dispositif d'introduction (30), destiné à déplacer un dispositif de saisie (M1, M2), est disposé afin qu'il assure le transport du chargement à l'entrée, en synchronisme avec le mouvement des articles sur le dispositif d'introduction (30), d'une manière telle que chaque article est ainsi disposé dans le canal principal (10) à une distance prédéterminée de l'article précédent, et il est destiné à commander les déplacements des deux dispositifs de saisie (M1, M2) de manière qu'ils provoquent à tour de rôle l'évacuation des articles indépendamment du fonctionnement de l'autre dispositif de saisie.

2. Appareil de rangement ordonné selon la revendication 1, **caractérisé en ce que** chaque dispositif de saisie (M1, M2) comporte au moins une paire de chaînes transporteuses (21a, 21b, 22a, 22b), telles que
chaque chaîne passe sans fin autour de deux roues d'extrémité (23a, 23b, 24a, 24b), une partie longitudinale de chaîne délimitant l'élément linéaire souple de saisie (25, 26),
chaque paire de chaînes (21a, 21b, 22a, 22b) comporte au moins deux chaînes placées sur des côtés opposés de l'axe longitudinal (A), et
les deux paires de chaînes sont disposées parallèlement et près l'une de l'autre côte à côte et sont entraînées indépendamment.

3. Appareil de rangement ordonné selon la revendication 2, **caractérisé en ce que** les éléments linéaires souples de saisie (25, 26) sont délimités chacun par une partie longitudinale respective de chaîne (21a, 21b, 22a, 22b) à la surface externe de laquelle sont fixés plusieurs éléments presseurs (27) qui peuvent fléchir élastiquement et sont disposés à proximité en formant une série, la distance entre deux éléments linéaires souples opposés (25, 26) étant légèrement inférieure à la dimension correspondante des articles, si bien que le contact avec les articles provoque une action de saisie.

4. Appareil de rangement ordonné selon la revendication 1, **caractérisé en ce que** le dispositif d'introduction (30) comprend une paire de courroies opposées sans fin (31) se trouvant dans un plan transversal à celui dans lequel les éléments linéaires souples de saisie (25, 26) sont disposés, et ayant une partie longitudinale (31") dans laquelle elles ont une distance mutuelle telle que, compte tenu des dimensions des articles, elles serrent ceux-ci entre eux.

5. Appareil de rangement ordonné selon la revendication 1, **caractérisé en ce que** la distance comprise entre les éléments de saisie (25, 26) est variable afin qu'elle soit adaptée à la dimension correspondante des articles.

6. Appareil de rangement ordonné selon la revendication 4, **caractérisé en ce que** la distance comprise entre les courroies opposées (31) est variable afin qu'elle soit adaptée à la dimension correspondante des articles.
